# EUROPEAN PATENT APPLICATION

(11) **EP 2 521 005 A1**
(43) Date of publication of application: **07.11.2012**
(21) Application number: 11164572.7
(22) Date of filing: 03.05.2011
(51) Int. Cl.: G06F 1/32, H04N 5/268

(54) **Energy-saving control system for automatically turning on/off electronic device**

(71) Applicant: ABA Electronics Technology Co. Ltd., New Taipei City (TW)
(72) Inventor: Ho, Chih-Yuan, New Taipei City (TW); Ho, Chih-Chun, New Taipei City (TW)
(74) Representative: Klemm, Rolf

(57) **Abstract**

An energy-saving control system for automatically turning on/off electronic device is disclosed. The control system includes at least one front end device for transmitting an A/V signal, a control device, and at least one back end device. The control device detects whether the at least one front end device transmits any A/V signal, and automatically controls on/off of power supply to an A/V control unit in the control device and/or the at least one back end device, so as to effective achieve energy saving.

## Description

### FIELD OF THE INVENTION

The present invention relates to an energy-saving control system for automatically turning on/off electronic device, and more particularly to a control system that automatically turns on/off electronic device according to an A/V signal input state to thereby achieve excellent energy saving effect and reduce loss of components in the control system.

### BACKGROUND OF THE INVENTION

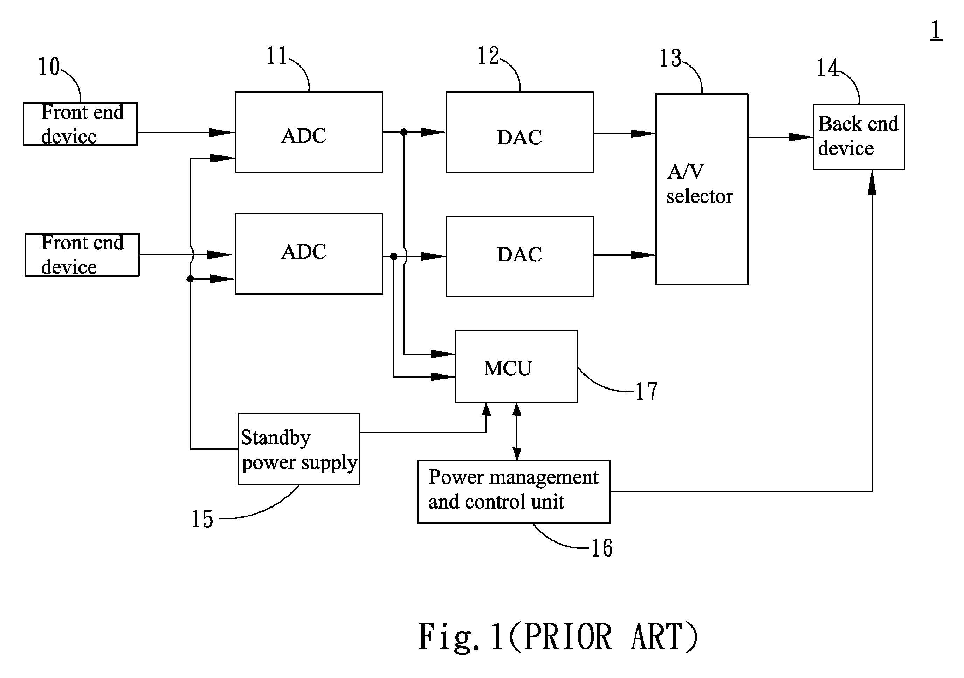

Fig. 1 is a block diagram of a conventional audio/video (A/V) control system 1. As shown, the conventional A/V control system 1 includes a plurality of front end devices 10, a plurality of analog-to-digital converters (ADCs) 11, a plurality of digital-to-analog converters (DACs) 12, a standby power supply 15, a microcontroller unit (MCU) 17, an A/V selector 13, a power management and control unit 16, and a back end device 14.

The front end devices 10 can be, for example, DVD (digital versatile disk) players, multimedia-on-demand (MOD) systems, or computers for outputting analog A/V signals to corresponding ADCs 11. The back end device 14 can be, for example, a display or a projector connected to the A/V selector 13 and the power management and control unit 16 for displaying or playing the analog A/V signal transmitted thereto by the A/V selector 13.

As can be seen in Fig. 1, the power management and control unit 16 is connected to the MCU 17 and the back end device 14 for managing and supplying alternating current (AC) power to the back end device 14, and turns on or off the AC power to the back end device 14 according to a control signal. The standby power supply 15 supplies direct current (DC) power to corresponding ADCs 11 and the MCU 17.

The DACs 12 are correspondingly connected to the ADCs 11 for converting received digital A/V signals into analog A/V signals and transmitting the latter to the A/V selector 13. And, the back end device 14 plays or displays the analog A/V signal selected via the A/V selector 13.

The ADCs 11 are connected to the corresponding front end devices 10, the MCU 17, and the standby power supply 15 for converting received analog A/V signals into digital A/V signals. The ADCs 11 respectively determine whether there is any analog A/V signal input thereto and generate an informing signal to the MCU 17 accordingly.

The MCU 17 knows from the informing signals whether there is any analog A/V signal transmitted from the front end devices 10 and generates the above-mentioned control signal to control the power management and control unit 16 to turn on or off the back end device 14. In the case the informing signals received by the MCU 17 indicate there is an analog A/V signal being transmitted, the MCU 17 generates the control signal to control the power management and control unit 16 to turn on the power supply to the back end device 14. On the other hand, when the informing signals received by the MCU 17 indicate there is not any analog A/V signal being transmitted, the MCU 17 generates the control signal to control the power management and control unit 16 to turn off the power supply to the back end device 14, so as to achieve energy saving effect.

However, the energy saving effect that can be achieved by the conventional A/V control system is low. This is because a low-level analog A/V signal lasting a long time would result in no picture or a black screen, which tends to cause the ADCs 11 to make incorrect determination about the A/V signal input and, in a worse condition, leads to a fully disabled control system and accordingly poor energy saving effect. Further, since the conventional A/V control system 1 requires a plurality of ADCs 11 and DACs 12 to convert the input analog A/V signals, the final analog A/V signals displayed or played on the back end device 14 might be distorted or delayed during the signal conversion.

Moreover, in practical implementation of the conventional A/V control system 1, the number of the ADCs 11 must correspond to that of the DACs 12, which inevitably increases the manufacturing cost of the A/V control system 1.

Accordingly, the conventional A/V control system has the following disadvantages: (1) having low energy saving effect; (2) tending to cause attenuation of the analog A/V signal displayed or played on the back end device; and (3) requiring increased manufacturing cost.

It is therefore tried by the inventor to develop an energy-saving control system for automatically turning on/off electronic device, so as to eliminate the disadvantages in the conventional A/V control system.

### SUMMARY OF THE INVENTION

A primary object of the present invention is to provide an energy-saving control system for automatically turning on/off electronic device, so that a control device of the control system detects whether at least one front end device transmits any A/V signal and automatically controls the power supply to an A/V control unit of the control device and/or to at least one back end device according to the detected result to thereby achieve effective energy saving.

Another object of the present invention is to provide an energy-saving control system for automatically turning on/off electronic device, so as to reduce loss of components of the control system.

A further object of the present invention is to provide an energy-saving control system for automatically turning on/off electronic device that can be manufactured at reduced cost.

To achieve the above and other objects, the energy-saving control system for automatically turning on/off electronic device according to the present invention includes at least one front end device for transmitting an A/V signal, a control device, and at least one back end device. The control device is electrically connected to the at least one front end device and the at least one back end device, and includes an A/V control unit connected to the at least one back end device and transmitting the A/V signal from the at least one front end device to a corresponding one of the at least one back end device according to a signal format of the A/V signal; at least one detection unit connected to the A/V control unit and the at least one front end device, and generating a first signal according to whether there is any detected A/V signal input from the at least one front end device; a processing unit connected to the at least one detection unit and the A/V control unit to receive the first signal, and generating a second signal according to a state of the first signal; a power control switch for controlling a power supply state of the A/V control unit according to the second signal (i.e. controlling the A/V control unit to on or sleep state); and a standby power supply connected to the processing unit and the at least one detection unit for supplying power thereto. With the above design, the control system of the present invention can effectively achieve the purpose of energy saving.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of a conventional A/V control system;
Fig. 2A is a block diagram of an energy-saving control system for automatically turning on/off electronic device according to the present invention;
Fig. 2B is a block diagram showing a variant of the present invention;
Fig. 3 is a block diagram of a first embodiment of the present invention; and
Fig. 4 is a block diagram of a second embodiment of the present invention.

### DETAILED DESCRIPTION OF THE PREFERRED EMBODIMENTS

The present invention will now be described with some preferred embodiments thereof and with reference to the accompanying drawings. For the purpose of easy to understand, elements that are the same in the preferred embodiments are denoted by the same reference numerals.

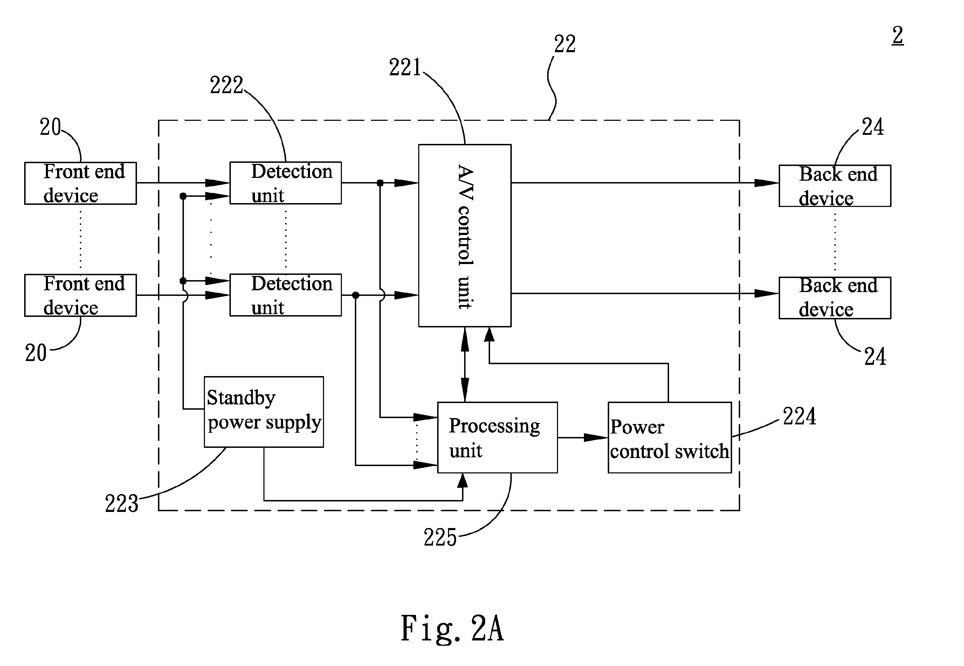

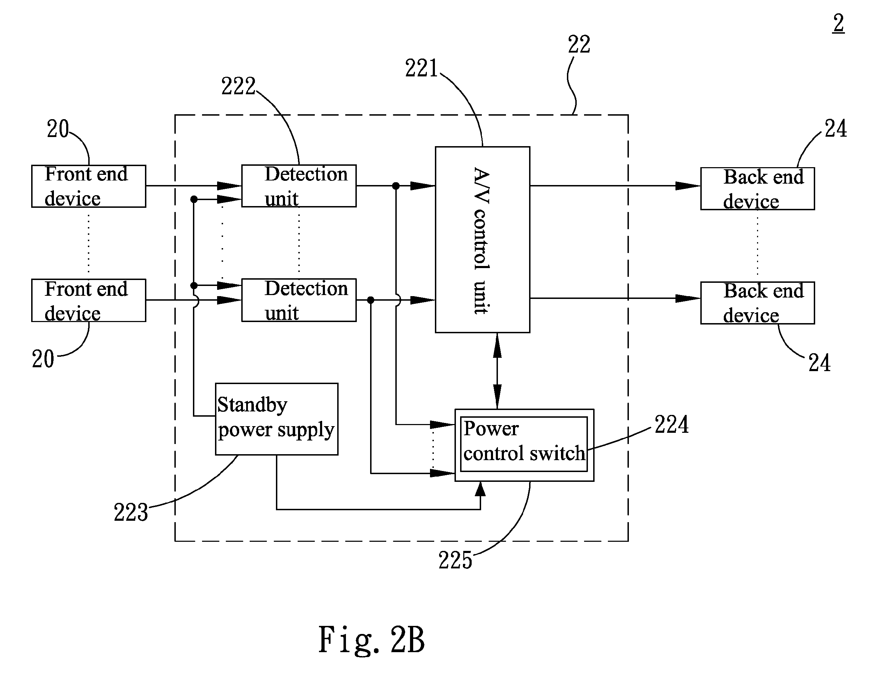

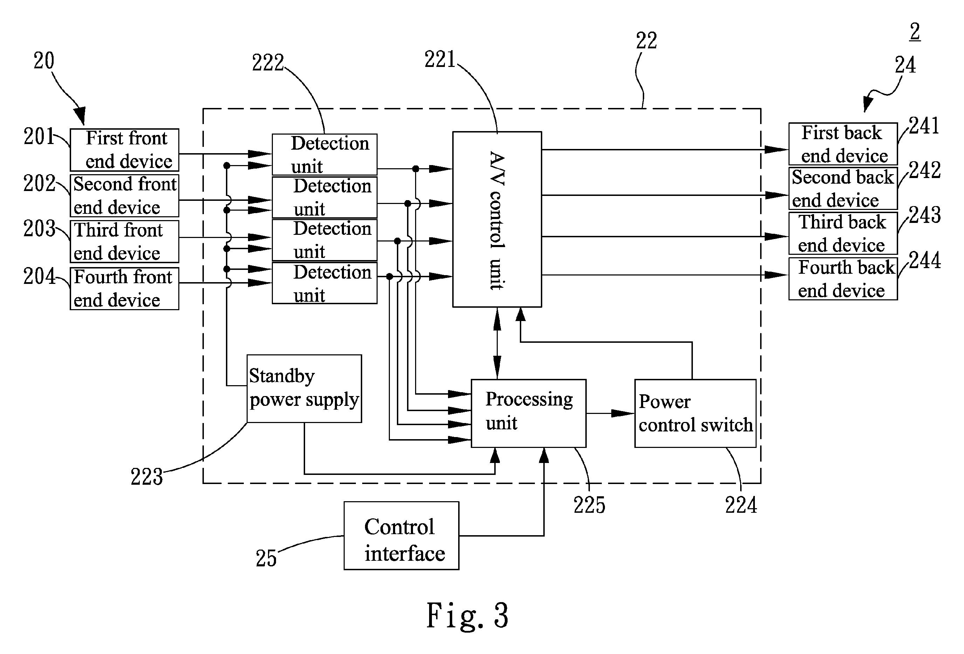

The present invention relates to an energy-saving control system 2 for automatically turning on/off electronic device. Please refer to Figs. 2A and 3 that are block diagrams of the present invention and a first embodiment thereof, respectively. As shown, the control system 2 includes at least one front end device 20 for transmitting an A/V signal, a control device 22, and at least one back end device 24. The front end device 20 is electrically connected to the control device 22, and can be, but not limited to, a voice player, a video player, an A/V multimedia player, a notebook computer, a computer, or any other electronic devices. In practical implementation of the present invention, the front device 20 refers to any device that is able to output audio and video signals.

In the first embodiment of the present invention, four pieces of front end devices 20 are illustrated to facilitate clear description of the present invention, and are sequentially denoted by reference numerals 201, 202, 203 and 204. In the first embodiment, the first front end device 201 is a multimedia-on-demand (MOD) system, the second front end device 202 is a DVD (digital versatile disk) player, the third front end device 203 is a computer, and the fourth front end device 204 is a microphone. However, it is understood that, in practically implementing the present invention, the number of the front end devices is not necessarily limited to four but can be increased according to user requirements.

Please refer to Figs. 2A and 3 at the same time. The back end device 24 is electrically connected to the control device 22, and can be, but not limited to, a display, a projector, an illuminating device, or any other electric products, such as an electric screen, a lighting fixture, an air-conditioning system or an audio device. In the first embodiment of the present invention, four pieces of back end devices 24 are illustrated to facilitate clear description of the present invention, and are sequentially denoted by reference numerals 241, 242, 243 and 244. In the first embodiment, the first back end device 241 is a display, the second back end device 242 is a projector, the third back end device 243 is an audio device, and the fourth back end device 244 is an electric screen.

The control device 22 includes an A/V control unit 221, at least one detection unit 222, a standby power supply 223, a power control switch 224, and a processing unit 225. The processing unit 225 is electrically connected to the at least one detection unit 222 and the A/V control unit 221. The A/V control unit 221 functions as an A/V distributor and an A/V selector, and is connected to the first, second, third and fourth back end devices 241, 242, 243 and 244. Further, the A/V control unit 221 transmits the A/V signals from the front end devices 20 to corresponding ones of the back end devices 24 according to the signal formats of the received A/V signals, so that the A/V signals are displayed or played on correct back end devices 24.

There are many different formats for the above-mentioned A/V signals, such as amplitude modulation (AM) broadcasting format, frequency modulation (FM) broadcasting format, or other analog audio signal formats; NTSC (National Television System Committee) video signal format, PAL (Phase Alternating Line) video signal format, SECAM (Sequential Color with Memory) video signal format or other analog video signal formats, RGB signal format, MPEG4 video format, PCM (Pulse-code Modulation) audio format, MP3 audio format, MP4 audio format, WAV (Waveform) audio format, AIFF (Audio Interchange File Format) audio format, AU (Audio File) audio format, AAC (Advanced Audio Coding) audio format, AVI (Audio Video Interleave) video format, RealMedia video format, Real Audio format, Liquid Audio format, DivX video format, QUICKTIME video format, CSS (Content Scramble System) DVD, and VCD (Video Compact Disc) video format.

As can be seen from the first embodiment of the present invention illustrated in Fig. 3, the control device 22 includes four detection units 222, which are respectively connected to between the A/V control unit 221 and the four front end devices 201, 202, 203 and 204, for detecting any A/V signal input and generating a first signal to the processing unit 225 accordingly. The processing unit 225, according to a state (i.e. high or low) of the received first signal, generates a second signal for controlling the power control switch 224 to ON or OFF. In the present invention, the processing unit 225 is a microcontroller unit (MCU), and is able to control the back end devices 241∼244 to a standby state or a sleep state via wire transmission (such as via RS232), or wireless transmission (such as infrared transmission).

For instance, when the first signal is high, the processing unit 225 will transmit the second signal to control the power control switch 224 to ON, so that power supply to the A/V control unit 221 is turned on, enabling the A/V control unit 221 to keep working and transmit the A/V signal to a corresponding one of the back end devices 241∼244.

On the other hand, when the first signal is low, the processing unit 225 will transmit the second signal to control the power control switch 224 to OFF, so that power supply to the A/V control unit 221 is turned off and no work is executed by the A/V control unit 221. In brief, A/V signals can be detected by the detection units 222 of the control device 22 without the need of using any other signal converting devices to convert the A/V signals, so that the A/V signals transmitted by the A/V control unit 221 to the corresponding back end devices 24 do not become distorted or attenuated. With the above arrangements, the whole control system 2 can operate in an excellent energy-saving manner and can be manufactured at effectively reduced cost.

In the first embodiment, four detection units 222 are illustrated. That is, the detection units 222 are in a number corresponding to that of the front end devices 20. The power control switch 224 turns on or off the power supply to the A/V control unit 221 according to the second signal. The power control switch 224 in the present invention can be arranged in the control device 22, as shown in Fig. 2A. Alternatively, according to a variant of the present invention, the power control switch 224 can be selectively arranged in the processing unit 225. That is, the power control switch 224 and the processing unit 225 together form an integrated circuit.

Please further refer to Fig. 3. The standby power supply 223 is connected to the processing unit 225 and the four detection units 222 for supplying power to them. Moreover, the control system 2 further includes a control interface 25 connected to the processing unit 225 for a user to input a command to the processing unit 225, so that the processing unit 225 controls a corresponding one of the back end devices 241∼244 according to the input command.

For instance, when a user wants to distribute the A/V signal from the second front end device 202 to the first and the second back end device 241, 242 for playing, the user has to input a command at the control interface 25, so that the command is sent to the processing unit 225 from the control interface 25. Then, according to the input command, the processing unit 225 controls the A/V control unit 221 to distribute the A/V signal from the second front end device 202 to the first and second back end devices 241, 242 for playing.

Or, when the user wants to distribute the A/V signal from the fourth front end device 204 to the third back end device 243 for playing, the user has to input a command at the control interface 25, so that the command is sent to the processing unit 225 from the control interface 25. Then, according to the input command, the processing unit 225 controls the A/V control unit 221 to distribute the A/V signal from the fourth front end device 204 to the third back end device 243 for playing.

It is known there are times of no picture or black screen due to lost A/V signal. Such black screen might cause the detection units 222 to wrongly determine that no A/V signal is input from the front end devices 20. For the detection units 222 to detect and determine accurately, the user may input in advance a preset time period, such as 2 minutes, via the control interface 25 to the processing unit 225. In the case of receiving a first signal of low level, the processing unit 225 compares the time period of receiving the low-level first signal with the preset time period. When the time period of receiving the low-level first signal is longer than the preset time period, the processing unit 225 determines there is not A/V signal input and transmits the second signal to control the power control switch 224 to OFF, so that no power is supplied to the A/V control unit 221 and the A/V control unit 221 does not execute any work.

On the other hand, when the time period of receiving the low-level first signal is shorter than the preset time period, the processing unit 225 determines there is A/V signal input and accordingly sends the second signal to control the power control unit 224 to ON, so that power is supplied to the A/V control unit 221 for the latter to work.

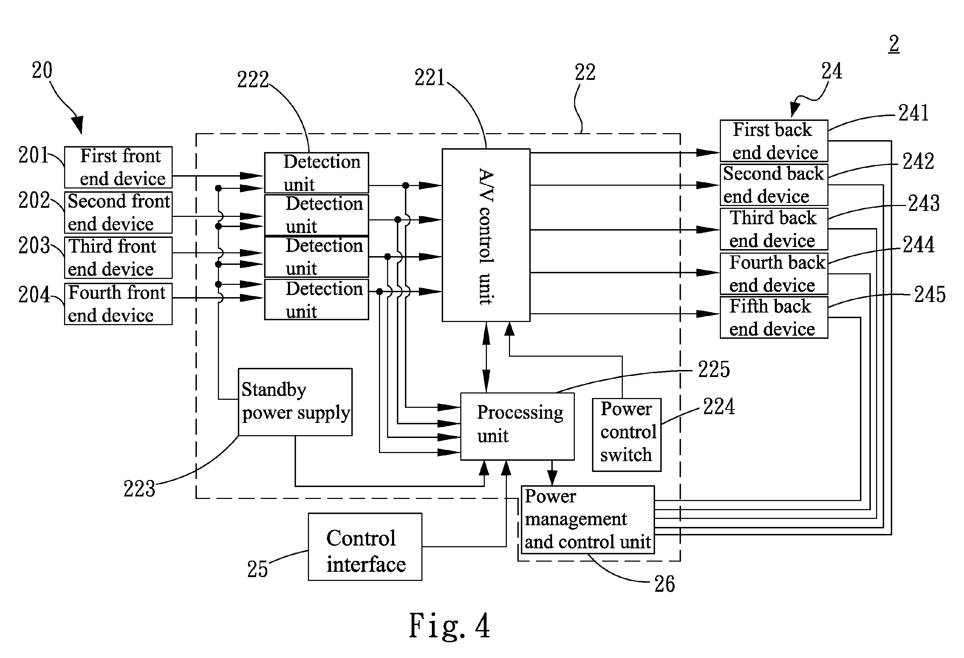

Please refer to Fig. 4 that is a block diagram of a second embodiment of the present invention. As shown, the second embodiment is generally structurally and functionally similar to the first embodiment, except for a power management and control unit 26 and a fifth back end device 245. The power management and control unit 26 is connected to the processing unit 225, the front end devices 20, and the back end devices 24 for managing and supplying AC power to the back end devices 24 and the front end devices 20; and controls the on/off of power supply to the corresponding back end devices 24 and/or front end devices 20 according to the second signal received by it. In the illustrated second embodiment, the power management and control unit 26 controls the on/off of the power supply to the corresponding back end devices 24 according to the second signal.

In the second embodiment, there are five back end devices 241∼245. The first back end device 241 is a display, the second back end device 242 is an electric screen and lighting fixture, the third back end device 243 is an audio device, the fourth back end device 244 is an air-conditioning system, and the fifth back end device 245 is a projector.

The present invention is now explained with an example as below.

The first to the fourth front end devices 201∼204 and the first to the fifth back end devices 241∼245 are provided in a teaching site, such as in a classroom, and are currently in a use state. In this case, the detection units 222 will detect A/V signal input at the first to fourth front end devices 201∼204 and generates a high-level first signal to the processing unit 225. From the received high-level first signal, the processing unit 225 determines the first to fourth front end devices 201∼204 are currently in use and accordingly sends a second signal to control the power control switch 224 to ON, so that power is supplied to the A/V control unit 221 for the latter to work. Meanwhile, the second signal also controls the power management and control unit 26 to ON, so that power is continuously supplied to the first to fifth back end devices 241∼245.

On the other hand, when the detection units 222 detect there is no longer any A/V signal input at the first to fourth front end devices 201∼204, the detection units 222 immediately generate a low-level first signal to the processing unit 225. From the received low-level first signal, the processing unit 225 determines the first to fourth front end devices 201∼204 are no longer in use and generates a second signal to control the power control switch 224 to OFF, so as to cut off the power supply to the A/V control unit 221, and the A/V control unit 221 stops executing any work. Meanwhile, the second signal also control the power management and control unit 26 to cut off the AC power supplied to the first to fifth back end devices 241∼245.

With the control system of the present invention, the problem of A/V signal distortion can be improved and many converters can be omitted in practical production. Meanwhile, with the present invention, it is able to achieve excellent energy saving effect and shorten the standby time of the control device 22 to thereby enable prolonged service life of internal components of the control device.

In conclusion, the present invention is superior to the prior art due to the following advantages: (1) excellent energy-saving effect; (2) reduced manufacturing cost; and (3) reduced loss of components in the control device.

The present invention has been described with some preferred embodiments thereof and it is understood that many changes and modifications in the described embodiments can be carried out without departing from the scope and the spirit of the invention that is intended to be limited only by the appended claims.

## Claims

1. An energy-saving control system for automatically turning on/off electronic device, comprising at least one front end device for transmitting an A/V signal, a control device, and at least one back end device; the control device being connected to the at least one front end device and the at least one back end device, and including:
an A/V control unit being connected to the at least one back end device and transmitting the A/V signal from the at least one front end device to a corresponding one of the at least one back end device according to a signal format of the A/V signal;
at least one detection unit being connected to the A/V control unit and the at least one front end device, and generating a first signal according to whether there is any detected A/V signal input at the at least one front end device;
a processing unit being connected to the at least one detection unit and the A/V control unit for receiving the first signal, and generating a second signal according to a state of the received first signal;
a power control switch for controlling an on/off state of the A/V control unit according to the second signal; and
a standby power supply being connected to the processing unit and the at least one detection unit for supplying power thereto.

2. The energy-saving control system as claimed in claim 1, wherein the power control switch is arranged in a position selected from the group consisting of the processing unit and the control device.

3. The energy-saving control system as claimed in claim 2, wherein the power control switch is arranged in the processing unit, so that the power control switch and the processing unit together form an integrated circuit.

4. The energy-saving control system as claimed in claim 1, wherein the processing unit is a microcontroller unit (MCU), which transmits the second signal to control the power control switch to ON when the received first signal is high, so that the power supply to the A/V control unit is turned on.

5. The energy-saving control system as claimed in claim 1, wherein the processing unit is a microcontroller unit (MCU), which transmits the second signal to control the power control switch to OFF when the received first signal is low, so that the power supply to the A/V control unit is turned off.

6. The energy-saving control system as claimed in claim 1, wherein the at least one front end device is selected from the group consisting of a voice player, a video player, an A/V multimedia player, a notebook computer, a computer, and any other electronic devices.

7. The energy-saving control system as claimed in claim 1, wherein the at least one back end device is selected from the group consisting of a display, a projector, an illuminating device, and any other electric products.

8. The energy-saving control system as claimed in claim 1, wherein the A/V signal format is selected from the group consisting of amplitude modulation (AM) broadcasting format, frequency modulation (FM) broadcasting format, other analog audio signal formats, NTSC (National Television System Committee) video signal format, PAL (Phase Alternating Line) video signal format, SECAM (Sequential Color with Memory) video signal format or other analog video signal formats, RGB signal format, MPEG4 video format, PCM (Pulse-code Modulation) audio format, MP3 audio format, MP4 audio format, WAV (Waveform) audio format, AIFF (Audio Interchange File Format) audio format, AU (Audio File) audio format, AAC (Advanced Audio Coding) audio format, AVI (Audio Video Interleave) video format, RealMedia video format, Real Audio format, Liquid Audio format, DivX video format, QUICKTIME video format, CSS (Content Scramble System) DVD, and VCD (Video Compact Disc) video format.

9. The energy-saving control system as claimed in claim 1, further comprising a power management and control unit connected to the processing unit, the at least one front end device and the at least one back end device for managing and supplying power to the front and back end devices, and controlling on/off of the power supply to the at least one back end device according to the second signal received from the processing unit.

10. The energy-saving control system as claimed in claim 1, further comprising a power management and control unit connected to the processing unit, the at least one front end device and the at least one back end device for managing and supplying power supply to the front and back end devices, and controlling on/off of the power supply to the at least one back end device and the at least one front end device according to the second signal received from the processing unit.

11. The energy-saving control system as claimed in claim 1, further comprising a control interface connected to the processing unit for a user to input a command to the processing unit, so that the processing unit controls corresponding ones of the at least one back end device according to the input command.

12. The energy-saving control system as claimed in claim 9, further comprising a control interface connected to the processing unit for a user to input a command to the processing unit, so that the processing unit controls corresponding ones of the at least one back end device according to the input command.
